# EUROPÄISCHE PATENTANMELDUNG

(11) **EP 4 786 245 A1**
(43) Veröffentlichungstag der Anmeldung: **05.08.2026**
(21) Anmeldenummer: 26155660.9
(22) Anmeldetag: 02.02.2026
(51) Int. Cl.: B60L 3/00, B60L 9/00, B60L 15/00, B60L 15/20

(54) **VERFAHREN ZUM BETREIBEN EINES ELEKTRISCHEN SCHIENENFAHRZEUGS**

(30) Priorität: 31.01.2025 DE 102025103657
(71) Anmelder: Siemens Mobility GmbH, 80997 München (DE)
(72) Erfinder: Cai, Jumei, 91058 Erlangen (DE)
(74) Vertreter: Siemens Patent Attorneys

(57) **Zusammenfassung**

Die Erfindung betrifft ein Verfahren zum Betreiben eines elektrischen Schienenfahrzeugs, wobei das Schienenfahrzeug ein elektrisches Antriebssystem, zumindest einen ersten und zumindest einen zweiten steuerbaren Netzstromrichter, welche mit dem Antriebssystem verbunden sind, eine Energieversorgungseinrichtung, über welche die Netzstromrichter mit einem fahrzeugexternen Versorgungsnetz verbunden sind, und eine Steuereinrichtung, welche ausgestaltet ist, zumindest die Netzstromrichter zu steuern, umfasst. Das Verfahren ist dadurch gekennzeichnet, dass der zumindest eine erste Netzstromrichter von der Steuereinrichtung mit einer ersten Schaltfrequenz betrieben wird und der zumindest eine zweite Netzstromrichter von der Steuereinrichtung mit einer zweiten Schaltfrequenz betrieben wird, wobei sich die erste und die zweite Schaltfrequenz unterscheiden.

## Beschreibung

Die Erfindung betrifft ein Verfahren zum Betreiben eines elektrischen Schienenfahrzeugs sowie ein entsprechendes elektrisches Schienenfahrzeug zur Durchführung des Verfahrens.

Elektrische Schienenfahrzeuge werden üblicherweise durch ein fahrzeugexternes elektrisches Versorgungsnetz bzw. Bahnstromnetz mit elektrischer Energie für dessen Betrieb versorgt. Hierzu weist das Versorgungsnetz entlang des Schienennetzes bzw. der Gleise geführte Oberleitungen oder Stromschienen auf, mit denen sich das Schienenfahrzeug mittels eines Stromabnehmers, insbesondere eines Pantographen, elektrisch verbindet.

Sofern das Versorgungsnetz eine Einphasen-Wechselspannung von beispielsweise 25 kV, 50 Hz, oder 15 kV, 16,7 Hz, führt, umfasst das elektrische System des Schienenfahrzeugs üblicherweise zumindest einen Transformator, welcher die primärseitig anliegende Netzspannung in eine sekundärseitig anliegende niedrigere Spannung transformiert. Dem Transformator nachgeschaltete Netzstromrichter wandeln die sekundärseitige Einphasen-Wechselspannung in die Zwischenkreisspannung eines Gleichspannungszwischenkreises. Die Netzstromrichter sind typischerweise als Vierquadrantensteller ausgestaltet, welche sowohl eine Speisung des Gleichspannungszwischenkreises aus dem Versorgungsnetz als auch eine Rückspeisung aus dem Gleichspannungszwischenkreis in das Versorgungsnetz ermöglichen.

Leistungshalbleiterschalter der Netzstromrichter werden von einer Steuereinrichtung des elektrischen Systems mit einer bestimmten Frequenz bzw. Schaltfrequenz geschaltet, um die Wandlung der Einphasen-Wechselspannung in die Gleichspannung bzw. umgekehrt zu steuern. Diese Schaltfrequenz bzw. Harmonische dieser Frequenz verursachen Störströme bzw. Störmagnetfelder auf der Netzseite, welche beispielsweise die Funktion von im befahrenen Gleis oder nahe dem Gleis angeordneten Sensor- und Kommunikationseinrichtungen, beispielsweise Achszähler bzw. Balisen, beeinträchtigen können. Es ist daher notwendig, solche von dem elektrischen System des Schienenfahrzeugs bzw. speziell von Netzstromrichtern dieses Systems ausgehenden Störkenngrößen in bestimmten Frequenzbereichen, insbesondere in Betriebsfrequenzbereichen solcher Einrichtungen, zu begrenzen bzw. auf Werte unterhalb vorgegebener Grenzwerte zu reduzieren.

Bei Verwendung mehrerer Netzstromrichter ist es beispielsweise bereits bekannt, diese mit einem Phasenversatz der Schaltfrequenzen zu betreiben und/oder ein spezielles Frequenzfilter vorzusehen, um Störkenngrößen in den kritischen Frequenzbereichen zu filtern. Da ein solches ergänzendes Filter auf der Primärseite des Transformators angeordnet ist, weisen die dafür verwendeten passiven Komponenten typischerweise ein großes Bauvolumen und Gewicht auf und erfordern aufgrund hoher Verluste gegebenenfalls ergänzend eine aktive Kühlung dieser Komponenten.

Um die Effizienz des elektrischen Systems weiter zu erhöhen, werden Netzstromrichter zunehmend mit einer deutlich höheren Schaltfrequenz, insbesondere einem zehn- bis zwanzigfachen der bislang üblichen Schaltfrequenz, betrieben sowie zusammen mit Transformatoren niedriger Induktivität eingesetzt. Solche hohen Schaltfrequenzen werden beispielsweise durch Einsatz von Leistungshalbleiterschaltern auf Basis von Siliziumkarbid anstelle des üblichen Silizium-Halbleitermaterials ermöglicht. Nachteilig resultieren höhere Schaltfrequenzen in Störkenngrößen in ebenso höheren Frequenzbereichen, für welche wiederum vorgegebene Grenzwerte gelten, die bislang insbesondere bei der Betriebszulassung des Schienenfahrzeugs nicht berücksichtigt werden mussten.

Aufgabe der Erfindung ist es, von Netzstromrichtern ausgehende Störeinflüsse auf streckenseitige, insbesondere gleisnahe, Einrichtungen zu reduzieren.

Diese Aufgabe wird gelöst durch ein Verfahren sowie durch ein elektrisches Schienenfahrzeug mit den jeweiligen Merkmalen der unabhängigen Patentansprüche. Weiterbildungen sind in jeweiligen abhängigen Patentansprüchen angegeben.

Das erfindungsgemäße Verfahren zum Betreiben eines elektrischen Schienenfahrzeugs, wobei das Schienenfahrzeug ein elektrisches Antriebssystem, zumindest einen ersten und zumindest einen zweiten steuerbaren Netzstromrichter, welche mit dem Antriebssystem verbunden sind, eine Energieversorgungseinrichtung, über welche die Netzstromrichter mit einem fahrzeugexternen Versorgungsnetz verbunden sind, und eine Steuereinrichtung, welche ausgestaltet ist, zumindest die Netzstromrichter zu steuern, umfasst, ist dadurch gekennzeichnet, dass der zumindest eine erste Netzstromrichter von der Steuereinrichtung mit einer ersten Schaltfrequenz betrieben wird und der zumindest eine zweite Netzstromrichter von der Steuereinrichtung mit einer zweiten Schaltfrequenz betrieben wird, wobei sich die erste und die zweite Schaltfrequenz unterscheiden.

Die steuerbaren Netzstromrichter sind, entsprechend der einleitenden Beschreibung, vorzugsweise als Vierquadrantensteller ausgestaltet. Durch geeignetes Steuern bzw. Schalten von Leistungshalbleiterschaltern mit einer bestimmten Schaltfrequenz, wandeln diese jeweils eine Einphasen-Wechselspannung in eine Gleichspannung bzw. eine Gleichspannung in eine Einphasen-Wechselspannung. Insbesondere kann die jeweilige Schaltfrequenz einem Vielfachen der Netzfrequenz des Versorgungsnetzes entsprechen.

Das Antriebssystem des elektrischen Schienenfahrzeugs kann einen oder mehrere Gleichspannungszwischenkreise umfassen, mit welchem bzw. welchen jeweils ein oder mehrere steuerbare Laststromrichter bzw. Motorstromrichter, vorzugsweise Pulswechselrichter, verbunden sind. Die Pulswechselrichter wandeln, durch geeignetes Steuern bzw. Schalten von Leistungshalbleiterschaltern durch die Steuereinrichtung, die Gleichspannung des Gleichspannungszwischenkreises in eine Dreiphasen-Wechselspannung variabler Höhe und Frequenz, mit welcher Statorwicklungen von ein oder mehreren Antriebsmotoren des Antriebssystems gespeist werden. Im Kontext der Erfindung umfasst das Antriebssystem insbesondere alle Komponenten des Schienenfahrzeugs, welche unmittelbar dessen Fortbewegung bewirken.

Die Energieversorgungseinrichtung des elektrischen Schienenfahrzeugs umfasst beispielsweise einen oder mehrere Transformatoren, deren Sekundärseite mit jeweils einem oder mehreren Netzstromrichtern verbunden ist. Primärseitig ist der Transformator beispielsweise über einen Hauptschalter sowie einen Stromabnehmer, insbesondere einen Pantographen, mit einer Oberleitung eines Versorgungsnetzes verbunden. Sofern das Versorgungsnetz eine Einphasen-Wechselspannung führt, wandelt der Transformator, entsprechend der einleitenden Beschreibung, diese primärseitig anliegende hohe Spannung in eine sekundärseitig anliegende niedrigere Einphasen-Wechselspannung, mit welcher die Netzstromrichter gespeist werden. Die Netzstromrichter wandeln, durch geeignetes Steuern bzw. Schalten von Leistungshalbleiterschaltern durch die Steuereinrichtung, die Einphasen-Wechselspannung in eine Gleichspannung, mit welcher der bzw. die Gleichspannungszwischenkreise des Antriebssystems gespeist werden.

Die erfindungsgemäß unterschiedlichen bzw. sich unterscheidenden Schaltfrequenzen des zumindest einen ersten Netzstromrichters und des zumindest einen zweiten Netzstromrichters ermöglichen eine Reduktion von einleitend beschriebenen Störkenngrößen während des Betriebs des elektrischen Systems des Schienenfahrzeugs, da sich diese bei bestimmten Frequenzen nicht konstruktiv überlagern, sondern über das Frequenzband verteilt auftreten. Diese Störkenngrößen, beispielsweise Störströme und Störmagnetfelder, können speziell in Frequenzbereichen, in welchen insbesondere im oder nahe dem Gleis angeordnete Komponenten betrieben werden, deren Funktion beeinträchtigen, weshalb in diesen Frequenzbereichen spezielle Anforderungen an solche Störkenngrößen gestellt werden bzw. Grenzwerte für diese definiert sind.

Vorzugsweise werden durch eine geeignete Wahl der Schaltfrequenzen die Störkenngrößen in den relevanten Frequenzbereichen so weit reduziert, dass von dem Einsatz eines einleitend beschriebenen zusätzlichen netzseitigen Frequenzfilters, insbesondere eines die relevanten Frequenzbereiche abdeckenden Bandpassfilters, abgesehen werden kann. Hierdurch können sowohl ein für die Komponenten eines solchen Filters benötigter Bauraum als auch deren Gewicht entfallen. Zudem entstehen keine Energieverluste während eines Betriebs dieser Filterkomponenten, welche gegebenenfalls eine ergänzende aktive Kühlung erfordert, die eine Effizienz des elektrischen Systems weiter verringern würde.

Nach einer Weiterbildung des erfindungsgemäßen Verfahrens ist der zumindest eine erste Netzstromrichter einer ersten Gruppe Netzstromrichter zugeordnet, und ist der zumindest eine zweite Netzstromrichter einer zweiten Gruppe Netzstromrichter zugeordnet, wobei alle Netzstromrichter der ersten Gruppe von der Steuereinrichtung mit der ersten Schaltfrequenz betrieben werden, und alle Netzstromrichter der zweiten Gruppe von der Steuereinrichtung mit der zweiten Schaltfrequenz betrieben werden.

Gemäß dieser Ausgestaltung werden die Netzstromrichter des elektrischen Systems in Gruppen unterteilt, wobei jeder Gruppe ausschließlich erste bzw. zweite Netzstromrichter zugeordnet. Dabei werden alle ersten Netzstromrichter der ersten Gruppe mit der ersten Schaltfrequenz und alle zweiten Netzstromrichter der zweiten Gruppe mit der zweiten Schaltfrequenz von der Steuereinrichtung betrieben.

Nach einer alternativen Weiterbildung des erfindungsgemäßen Verfahrens sind einer ersten Gruppe Netzstromrichter zumindest ein erster Netzstromrichter und zumindest ein zweiter Netzstromrichter zugeordnet, und sind einer zweiten Gruppe Netzstromrichter zumindest ein erster Netzstromrichter und zumindest ein zweiter Netzstromrichter zugeordnet, wobei alle ersten Netzstromrichter der Gruppen von der Steuereinrichtung mit der ersten Schaltfrequenz betrieben werden und alle zweiten Netzstromrichter der Gruppen von der Steuereinrichtung mit der zweiten Schaltfrequenz betrieben werden.

Gemäß dieser Weiterbildung werden jeder der beiden Gruppen sowohl zumindest ein erster Netzstromrichter als auch ein zweiter Netzstromrichter zugeordnet. Dabei werden gruppenübergreifend alle ersten Netzstromrichter mit der ersten Schaltfrequenz und ebenso gruppenübergreifend alle zweiten Netzstromrichter mit der zweiten Schaltfrequenz von der Steuereinrichtung betrieben.

Nach einer weiteren alternativen Weiterbildung des erfindungsgemäßen Verfahrens sind bei einem Betreiben einer ersten Gruppe Netzstromrichter und einer zweiten Gruppe Netzstromrichter zumindest zwei erste Netzstromrichter der ersten Gruppe zugeordnet und zumindest zwei zweite Netzstromrichter der zweiten Gruppe zugeordnet, wobei alle Netzstromrichter der ersten Gruppe von der Steuereinrichtung mit der ersten Schaltfrequenz betrieben werden und alle Netzstromrichter der zweiten Gruppe von der Steuereinrichtung mit der zweiten Schaltfrequenz betrieben werden, und werden bei einem Betreiben ausschließlich der ersten Gruppe zumindest ein erster Netzstromrichter und zumindest ein zweiter Netzstromrichter der ersten Gruppe zugeordnet, wobei alle ersten Netzstromrichter der ersten Gruppe von der Steuereinrichtung mit der ersten Schaltfrequenz betrieben werden und alle zweiten Netzstromrichter der ersten Gruppe von der Steuereinrichtung mit der zweiten Schaltfrequenz betrieben werden, oder werden bei einem Betreiben ausschließlich der zweiten Gruppe zumindest ein erster Netzstromrichter und zumindest ein zweiter Netzstromrichter der zweiten Gruppe zugeordnet, wobei alle ersten Netzstromrichter der zweiten Gruppe von der Steuereinrichtung mit der ersten Schaltfrequenz betrieben werden und alle zweiten Netzstromrichter der zweiten Gruppe von der Steuereinrichtung mit der zweiten Schaltfrequenz betrieben werden.

Gemäß dieser Weiterbildung kann ausgehend von einem Betreiben beider Gruppen Netzstromrichter mit jeweils einer Schaltfrequenz bei beispielsweise einem Ausfall oder einer gesteuerten Abschaltung einer der Gruppen durch die Steuereinrichtung die Zuordnung erster und zweiter Netzstromrichter zu den Gruppen geändert werden, um bei dem Betreiben lediglich einer der Gruppen die Netzstromrichter ebenso mit unterschiedlichen Schaltfrequenzen zu betreiben.

Nach einer auf den drei vorstehenden alternativen Weiterbildungen basierenden weiteren Weiterbildung des erfindungsgemäßen Verfahrens erfolgt eine Zuordnung von Netzstromrichtern zu den Gruppen, insbesondere durch die Steuereinrichtung, derart, dass sich eine Anzahl der ersten Gruppe zugeordneter erster Netzstromrichter von einer Anzahl der zweiten Gruppe zugeordneter zweiter Netzstromrichter unterscheidet.

Gemäß dieser Weiterbildung kann die Anzahl der jeweiligen Gruppe zugeordneter Netzstromrichter beispielsweise abhängig von der Schaltfrequenz, mit welcher die Netzstromrichter der jeweiligen Gruppe betrieben werden, gewählt werden. Sofern die mit einer bestimmten, beispielsweise ersten Schaltfrequenz betriebenen Netzstromrichter nur einen vergleichsweise geringen Einfluss auf eine Störkenngröße haben, kann eine größere Anzahl Netzstromrichter mit dieser Schaltfrequenz von der Steuereinrichtung betrieben und somit eine größere Gruppe aus diesen gebildet werden. Sofern die mit einer unterschiedlichen bestimmten, beispielsweise zweiten Schaltfrequenz betriebenen Netzstromrichter einen vergleichsweise größeren Einfluss auf die Störkenngröße haben, kann eine kleinere Anzahl Netzstromrichter mit dieser anderen Schaltfrequenz von der Steuereinrichtung betrieben und somit eine kleinere Gruppe aus diesen gebildet werden. Die jeweilige Größe der Gruppen bzw. deren jeweilige Anzahl zugeordneter Netzstromrichter kann somit abhängig von frequenzspezifischen Störkenngrößen, insbesondere von der Steuereinrichtung, gewählt werden.

Nach einer weiteren Weiterbildung des erfindungsgemäßen Verfahrens werden die ersten Netzstromrichter von der Steuereinrichtung mit einem jeweiligen Phasenversatz der ersten Schaltfrequenz betrieben, und/oder werden die zweiten Netzstromrichter von der Steuereinrichtung mit einem jeweiligen Phasenversatz der zweiten Schaltfrequenz betrieben, wobei sich die Versätze der jeweiligen Schaltfrequenz unterscheiden.

Gemäß dieser Weiterbildung kann für die mit einer gleichen Schaltfrequenz betriebenen Netzstromrichter ein ergänzender Phasenversatz vorgesehen werden, um den Einfluss dieser Schaltfrequenz auf eine Störkenngröße weiter zu verringern.

Nach einer weiteren Weiterbildung des erfindungsgemäßen Verfahrens umfasst die Energieversorgungseinrichtung des elektrischen Systems zumindest einen Transformator, wobei der Transformator mit der ersten Gruppe und der zweiten Gruppe verbunden ist, oder wobei ein erster Transformator mit der ersten Gruppe verbunden ist und ein zweiter Transformator mit der zweiten Gruppe verbunden ist.

Gemäß dieser Weiterbildung kann das elektrische System mehrere Transformatoren umfassen, welche beispielsweise über einen gemeinsamen oder gesonderte Stromabnehmer der Energieversorgungseinrichtung mit dem Versorgungsnetz verbunden sind. Durch die bestimmten Schaltfrequenzen, mit denen die mit dem jeweiligen Transformator verbundenen Netzstromrichter bzw. Gruppen von Netzstromrichtern von der Steuereinrichtung betrieben werden, beeinflussen diese unabhängig von der Anzahl in gleicher Weise die von dem elektrischen System ausgehenden Störkenngrößen.

Nach einer weiteren Weiterbildung des erfindungsgemäßen Verfahrens werden die Netzstromrichter von der Steuereinrichtung jeweils mit einer Schaltfrequenz größer 20 kHz betrieben, wobei Leistungshalbleiterschalter der Netzstromrichter insbesondere auf einem Halbleitermaterial mit einer größeren Bandlücke als Silizium basieren.

Gemäß dieser Weiterbildung werden die Leistungshalbleiterschalter, beispielsweise auf Basis von Siliziumkarbid-Halbleitermaterial, der Netzstromrichter mit einer deutlichen höheren Schaltfrequenz als die bislang eingesetzten Leistungshalbleiterschalter auf Basis von Silizium-Halbleitermaterial betrieben. Insbesondere in Verbindung mit einem niederinduktiven Transformator ermöglicht dies eine höhere Effizienz im Vergleich zu bekannten elektrischen Systemen von Schienenfahrzeugen.

Nach einer weiteren Weiterbildung des erfindungsgemäßen Verfahrens werden die erste und die zweite Schaltfrequenz von der Steuereinrichtung derart gewählt, dass eine aus deren Kombination resultierende Intensität einer für das Versorgungsnetz relevanten Störkenngröße kleiner als ein der Störkenngröße zugeordneter vorgegebener Grenzwert ist.

Gemäß dieser Weiterbildung werden die Schaltfrequenzen für die Netzstromrichter bzw. Gruppen von Netzstromrichtern nach deren individueller und gegenseitiger Wirkung auf die Störkenngröße gewählt, sodass beispielsweise vorgegebene Grenzwerte für eine Störkenngröße in einem bestimmten Frequenzband nicht überschritten werden.

Ein erfindungsgemäßes elektrisches Schienenfahrzeug umfasst ein elektrisches Antriebssystem, zumindest einen ersten und zumindest einen zweiten steuerbaren Netzstromrichter, welche mit dem Antriebssystem verbunden sind, eine Energieversorgungseinrichtung, über welche die Netzstromrichter mit einem fahrzeugexternen Versorgungsnetz verbunden sind, und eine Steuereinrichtung, welche ausgestaltet ist, zumindest die Netzstromrichter zu steuern, und ist dadurch gekennzeichnet, dass die Steuereinrichtung ausgestaltet ist, den zumindest einen ersten Netzstromrichter und den zumindest einen zweiten Netzstromrichter derart zu steuern, dass der zumindest eine erste Netzstromrichter mit einer ersten Schaltfrequenz und der zumindest eine zweite Netzstromrichter mit einer zweiten Schaltfrequenz betrieben wird, wobei sich die erste und die zweite Schaltfrequenz unterscheiden.

Das erfindungsgemäße Schienenfahrzeug kann insbesondere als ein Triebzug für die Fahrgastbeförderung im Nah-, Regional- und Fernverkehr ausgestaltet sein.

Nach einer Weiterbildung des erfindungsgemäßen Schienenfahrzeugs sind die Netzstromrichter jeweils als ein Vierquadrantensteller ausgestaltet.

Entsprechend der einleitenden Beschreibung wandeln solche Vierquadrantensteller eine Einphasen-Wechselspannung, welche beispielsweise von der Sekundärseite eines Transformators der Energieversorgungseinrichtung bereitgestellt wird, in eine Gleichspannung für einen Gleichspannungszwischenkreis des Antriebssystems.

Nach einer weiteren Weiterbildung des erfindungsgemäßen Schienenfahrzeugs ist der zumindest eine erste Netzstromrichter einer ersten Gruppe Netzstromrichter zugeordnet, und ist der zumindest eine zweite Netzstromrichter einer zweiten Gruppe Netzstromrichter zugeordnet, oder sind einer ersten Gruppe Netzstromrichter zumindest ein erster Netzstromrichter und zumindest ein zweiter Netzstromrichter zugeordnet, und sind einer zweiten Gruppe Netzstromrichter zumindest ein erster Netzstromrichter und zumindest ein zweiter Netzstromrichter zugeordnet, und umfasst die Energieversorgungseinrichtung zumindest einen Transformator, wobei der Transformator mit der ersten Gruppe und der zweiten Gruppe verbunden ist, oder wobei ein erster Transformator mit der ersten Gruppe verbunden ist und ein zweiter Transformator mit der zweiten Gruppe verbunden ist.

Nachfolgend wird die Erfindung anhand von Ausführungsbeispielen näher erläutert. Dabei zeigen:
- FIG 1: ein Schienenfahrzeug mit einer ersten Ausgestaltung eines elektrischen Systems,
- FIG 2: das Schienenfahrzeug der FIG 1 mit einer zweiten Ausgestaltung eines elektrischen Systems,
- FIG 3: das Schienenfahrzeug und elektrische System der FIG 2 mit einer unterschiedlichen Betriebssituation, und
- FIG 4: das Schienenfahrzeug und elektrische System der FIG 2 mit einer unterschiedlichen Zuordnung.

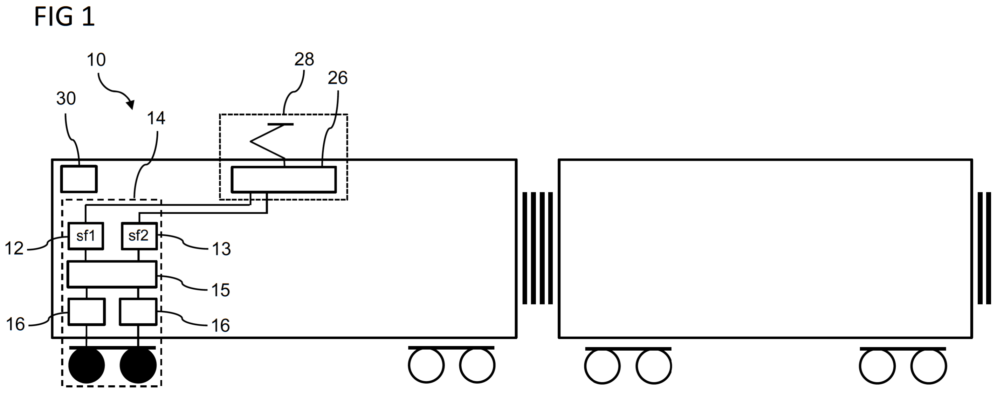

FIG 1 zeigt schematisch ein Schienenfahrzeug 10, welches beispielhaft als ein elektrischer Triebzug mit einer Mehrzahl Wagen für die Fahrgastbeförderung ausgestaltet ist. Neben den dargestellten zwei Wagen, einem Endwagen und einem ersten Mittelwagen, kann ein solcher Triebzug entsprechend weitere Wagen umfassen. Fahrgasträume benachbarter Wagen sind über schematisch dargestellte Wagenübergänge sowie über nicht dargestellte Türen in Seitenwänden des Wagenkastens des jeweiligen Wagens für Fahrgäste zugänglich.

In dem dargestellten linken Endwagen sind schematisch Komponenten eines elektrischen Systems des Schienenfahrzeugs 10 dargestellt. Diese Komponenten können in oder an dem Wagenkasten des Endwagens, jedoch ebenso auf mehrere Wagen bzw. Wagenkästen des Schienenfahrzeugs 10 verteilt angeordnet sein.

Die Wagen des Schienenfahrzeugs stützen sich beispielhaft über jeweils zwei Drehgestelle auf einem nicht dargestellten Gleis eines Streckennetzes ab. Ebenso können sich benachbarte Wagen auf einem gemeinsamen Drehgestell, insbesondere einem so genannten Jakobs-Drehgestell, abstützen. Ein äußeres Drehgestell des Endwagens ist beispielhaft als ein Triebdrehgestell mit zwei angetriebenen Radsätzen ausgestaltet, während das weitere Drehgestell sowie die beiden Drehgestelle des Mittelwagens beispielhaft jeweils als ein Laufdrehgestell ohne angetriebene Radsätze ausgestaltet sind.

Die beiden Radsätze des äußeren Drehgestells des Endwagens werden beispielhaft von einem jeweiligen elektrischen Antriebsmotor des elektrischen Antriebssystems 14 des Schienenfahrzeugs 10 angetrieben. Die Antriebsmotoren bzw. deren Statorwicklungen werden von einem oder mehreren Antriebsstromrichtern 16 des Antriebssystems 14 gespeist, in dem dargestellten Antriebssystem 14 wird jeder Antriebsmotor von einem Antriebsstromrichter 16 gespeist. Die Antriebsstromrichter 16 sind beispielsweise als ein jeweiliger Pulswechselrichter ausgestaltet, welcher eine Gleichspannung eines Gleichspannungszwischenkreises 15 des Antriebssystems 14 in eine Dreiphasen-Wechselspannung variabler Höhe und Frequenz wandelt. Die Antriebsmotoren sind entsprechend beispielhaft als Drehstrom-Asynchron- oder Drehstrom-Synchron-Maschinen ausgestaltet und übertragen das erzeugte Drehmoment über eine Kupplung oder ergänzend über ein Getriebe auf eine Radsatzwelle eines jeweiligen Radsatzes.

Gespeist wird der Gleichspannungszwischenkreis 15 des Antriebssystems 14 durch einen ersten 12 und einen zweiten Netzstromrichter 13. Die Netzstromrichter 12, 13 sind beispielhaft jeweils als ein Vierquadrantensteller ausgestaltet, welcher eine von einem Transformator 26 einer Energieversorgungseinrichtung 28 bereitgestellte Einphasen-Wechselspannung in die Gleichspannung bzw. Zwischenkreisspannung des Gleichspannungszwischenkreises 15 wandelt. Beispielsweise sind die Netzstromrichter 12, 13 elektrisch parallelgeschaltet und speisen gemeinsam einen Gleichspannungszwischenkreis 15.

Der beispielhafte eine Transformator 26 ist über einen Hauptschalter sowie einen Stromabnehmer der Energieversorgungseinrichtung 28 mit einem Versorgungsnetz, beispielsweise einer nicht dargestellten Oberleitung eines Bahnstromnetzes, elektrisch verbunden. Bei einer Speisung des elektrischen Systems aus dem Versorgungsnetz transformiert der Transformator 26 die primärseitig anliegende Einphasen-Wechselspannung der Oberleitung in eine sekundärseitig, beispielsweise an einer Sekundärwicklung des Transformators 26, anliegende niedrigere Einphasen-Wechselspannung, welche entsprechend vorstehender Beschreibung von den Netzstromrichtern 12, 13 in eine Gleichspannung für den Gleichspannungszwischenkreis 15gewandelt wird. Sofern elektrische Energie des Gleichspannungszwischenkreises 15 in das Versorgungsnetz rückgespeist werden soll, wandeln die Netzstromrichter 12, 13 die Zwischenkreisspannung jeweils in eine Einphasen-Wechselspannung, welche von dem Transformator in eine höhere Einphasen-Wechselspannung transformiert wird.

Die Spannung des Versorgungsnetzes, beispielsweise 15 kV, 16,7 Hz, oder 25 kV, 50 Hz, besteht zwischen dem Spannungspotenzial der Oberleitung und dem Spannungspotenzial des Gleises. Die Primärseite des Transformators ist daher einerseits über den Stromabnehmer mit der Oberleitung, andererseits üblicherweise über Räder eines oder mehrerer Radsätze mit dem Gleis verbunden.

Die verschiedenen Komponenten des elektrischen Systems werden von einer Steuereinrichtung 30 gesteuert, welche beispielsweise als eine Antriebssteuerung ausgestaltet sein kann, welche eine zentrale elektronische Steuereinheit oder mehrere, insbesondere verteilt angeordnete, elektronische Steuereinheiten umfassen kann. Mit den Komponenten ist die Steuereinrichtung 30 über nicht dargestellte Steuerleitungen verbunden, über welche Steuerbefehle sowie gegebenenfalls weitere Informationen zu den Komponenten bzw. von diesen zu der Steuereinrichtung 30 übertragen werden.

Insbesondere steuert die Steuereinrichtung 30 die Netzstromrichter 12, 13 bzw. das Schalten von deren Leistungshalbleiterschaltern. Das Schalten der Leistungshalbleiterschalter der Netzstromrichter 12, 13 erfolgt mit einer bestimmten Frequenz, der Schaltfrequenz. Bei Leistungshalbleiterschaltern auf Basis von beispielsweise Siliziumkarbid-Halbleitermaterial kann dieses Schalten mit Schaltfrequenzen von über 20 kHz erfolgen. Aufgrund der elektrischen Verbindung der Netzstromrichter 12, 13 mit dem Versorgungsnetz bzw. dem Gleis entstehen auf deren Seite Störströme. Diese hochfrequenten, sowohl die Schaltfrequenz selbst als auch deren Harmonische umfassenden Störströme fließen in dem Versorgungsnetz bzw. dem Gleis und können die Funktion von insbesondere im oder nahe dem Gleis angeordneten Sensoren, beispielsweise Achszählern, sowie Kommunikationseinrichtungen, beispielsweise Balisen, stören.

Zur Reduzierung dieser Störströme unterhalb vorgegebener Grenzwerte für bestimmte Frequenzbereiche betreibt die Steuereinrichtung 30 die Netzstromrichter 12, 13 mit unterschiedlichen Schaltfrequenzen bzw. schaltet deren Leistungshalbleiterschalter mit unterschiedlichen Schaltfrequenzen. Dabei werden die Leistungshalbleiterschalter des ersten Netzstromrichters 12 mit einer ersten Schaltfrequenz sf1 geschaltet, während die Leistungshalbleiterschalter des zweiten Netzstromrichters 13 mit einer zweiten Schaltfrequenz sf2 geschaltet werden. Die erste Schaltfrequenz sf1 kann dabei höher oder niedriger als die zweite Schaltfrequenz sf2 sein. Beide Schaltfrequenzen sf1, sf2 werden, insbesondere von der Steuereinrichtung 30, derart gewählt, dass die während des Betriebs der Netzstromrichter 12, 13 aufgrund des Schaltens auf der Primärseite des Transformators 26 entstehenden Störströme vorgegebene Grenzwerte nicht überschreiten.

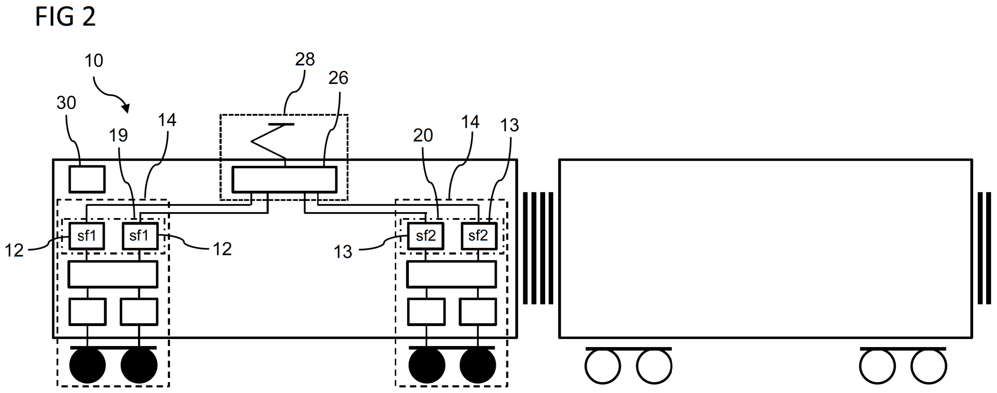

FIG 2 zeigt das Schienenfahrzeug 10 der FIG 2 mit einem alternativen zweiten elektrischen System. Ergänzend zu den Netzstromrichtern 12, 13 sowie dem Antriebssystem 14 des vorstehend beschriebenen elektrischen Systems umfasst das elektrische System der FIG 2 weitere Netzstromrichter 12, 13 sowie ein weiteres Antriebssystem 14. Diese auf der rechten Seite des Endwagens ergänzend dargestellten Netzstromrichter 12, 13 und das Antriebssystem 14 sind beispielhaft entsprechend den vorstehend zu FIG 1 beschriebenen und auf der linken Seite des Endwagens dargestellten Netzstromrichtern 12, 13 bzw. dem Antriebssystem 14 ausgestaltet und führen die entsprechenden Funktionen aus. Die weiteren Netzstromrichter 12, 13 sind ebenfalls mit der Sekundärseite des Transformators 26 der Energieversorgungseinrichtung 28, beispielsweise einer weiteren Sekundärwicklung des Transformators 26, verbunden.

In dem elektrischen System der FIG 2 sind die gesamt vier Netzstromrichter 12, 13 in zwei Gruppen 19, 20, wie sie durch strichpunktierte Linien gekennzeichnet sind, unterteilt. Einer ersten Gruppe 19 auf der linken Seite sind zwei erste Netzstromrichter 12 zugeordnet, während einer zweiten Gruppe 20 auf der rechten Seite zwei zweite Netzstromrichter 13 zugeordnet sind. Die ersten Netzstromrichter 12 der ersten Gruppe 19 werden während des Betriebs des elektrischen Systems von der Steuereinrichtung 30 jeweils mit der ersten Schaltfrequenz sf1 betrieben bzw. deren Leistungshalbleiterschalter jeweils mit der ersten Schaltfrequenz sf1 geschaltet. Die zweiten Netzstromrichter 13 der zweiten Gruppe 20 werden während des Betriebs des elektrischen Systems von der Steuereinrichtung 30 hingegen jeweils mit der zweiten Schaltfrequenz sf2 betrieben bzw. deren Leistungshalbleiterschalter jeweils mit der zweiten Schaltfrequenz sf2 geschaltet. Um eine Überlagerung von Störströmen der mit derselben Schaltfrequenz betriebenen Netzstromrichter 12, 13 zu vermeiden, wird von der Steuereinrichtung 30 beispielsweise ergänzend ein Phasenversatz vorgesehen. Hierdurch werden die beiden ersten Netzstromrichter 12 zwar mit der derselben ersten Schaltfrequenz sf1 betrieben, jedoch unterscheidet sich die Phase des Schaltsignals der Steuereinrichtung 30 für den einen ersten Netzstromrichter 12 von der Phase des Schaltsignals der Steuereinrichtung 30 für den anderen ersten Netzstromrichter 12. Entsprechend unterschiedliche Phasen werden von der Steuereinrichtung 30 auch für die Schaltsignale für die zweiten Netzstromrichter 13 vorgesehen.

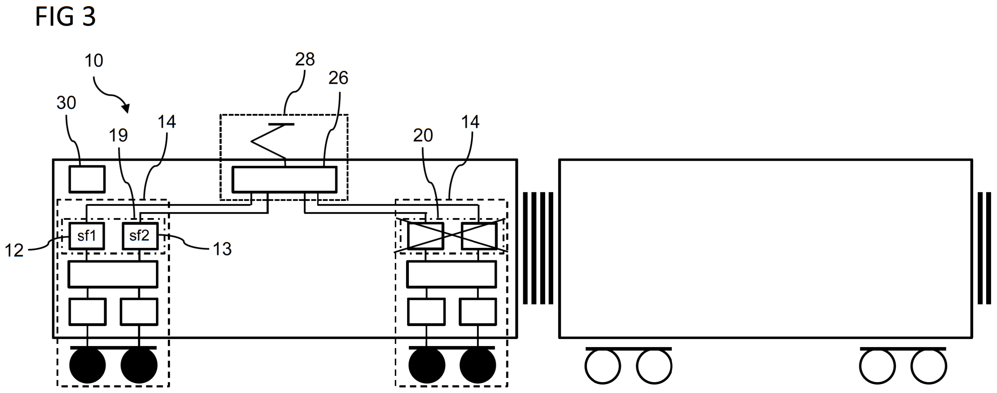

FIG 3 zeigt das Schienenfahrzeug 10 und das elektrische System der FIG 2, jedoch in einer anderen Betriebssituation. In dieser Betriebssituation liegt beispielsweise ein Ausfall der zweiten Gruppe 20 Netzstromrichter auf der rechten Seite vor, welches durch eine Durchstreichung dieser zweiten Gruppe 20 verdeutlicht wird. Der Ausfall kann beispielsweise aufgrund einer Fehlfunktion oder eines Defektes in einem der Netzstromrichter der zweiten Gruppe 20, in dem oder einem der Antriebsstromrichter 16 des Antriebssystems 14, oder in einem der Antriebsmotoren des Antriebssystems 14 bedingt sein. Bei einem solchen Ausfall kann das Schienenfahrzeug 10 üblicherweise fortgesetzt betrieben werden, da über das Antriebssystem 14 auf der linken Seite weiterhin die Hälfte der gesamten Antriebsleistung zur Verfügung steht.

Sofern die Energieversorgungseinrichtung 28 beispielsweise zwei Transformatoren 26 umfasst und die Komponenten auf der linken Seite mit dem einen Transformator und die weiteren Komponenten auf der rechten Seite mit dem anderen Transformator verbunden sind, kann auch ein Defekt dieses anderen Transformators zu einem solchen beispielhaften Ausfall führen, da die Netzstromrichter der zweiten Gruppe 20 nicht mehr von diesem gespeist werden können.

Alternativ zu einem Ausfall der zweiten Gruppe 20 Netzstromrichter aufgrund eines Defekts können deren Netzstromrichter von der Steuereinrichtung 30 beispielsweise auch gezielt in einen Sperrbetrieb geschaltet werden, beispielsweise aufgrund geringerer Anforderungen an die Antriebsleistung des elektrischen Systems.

In dieser beschriebenen anderen Betriebssituation sind bzw. werden der ersten Gruppe 19 sowohl ein erster Netzstromrichter 12 als auch ein zweiter Netzstromrichter 20 zugeordnet, wobei der erste Netzstromrichter 12 von der Steuereinrichtung 30 mit der ersten Schaltfrequenz sf1 betrieben wird und der zweite Netzstromrichter 13 von der Steuereinrichtung 30 mit der zweiten Schaltfrequenz sf2 betrieben wird. Auch bei einem Ausfall bzw. absichtlichen Sperren der ersten Gruppe 20 wird hierdurch die Diversität der Schaltfrequenzen für den Betrieb der Netzstromrichter 12, 13 der ersten Gruppe 10 aufrechterhalten.

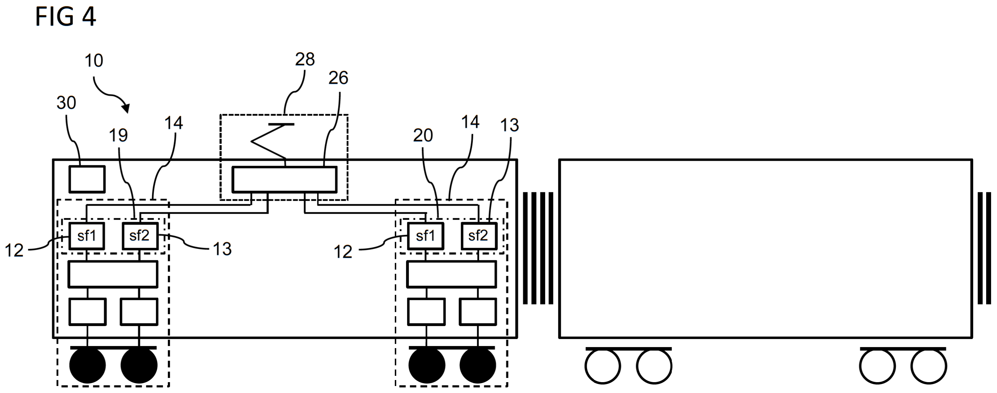

FIG 4 zeigt ebenfalls das Schienenfahrzeug 10 und das elektrische System der FIG 2, jedoch mit einer unterschiedlichen Zuordnung der ersten und zweiten Netzstromrichter 12, 13 zu den Gruppen 19, 20 Netzstromrichter. In dem System der FIG 3 ist beiden Gruppen 19, 20 jeweils sowohl ein erster Netzstromrichter 12 als auch ein zweiter Netzstromrichter 13 zugeordnet. Die ersten Netzstromrichter 12 werden wiederum von der Steuereinrichtung 30 mit der ersten Schaltfrequenz sf1 betrieben, die zweiten Netzstromrichter 13 werden wiederum von der Steuereinrichtung 30 mit der zweiten Schaltfrequenz sf2 betrieben. Hierdurch ist in jeder der beiden Gruppen 19, 20 eine Diversität der Schaltfrequenzen für den Betrieb der jeweils zugeordneten Netzstromrichter 12, 13 gegeben, sodass bei einer vorstehend bezüglich der FIG 3 beschriebenen Betriebssituation keine Änderung der Zuordnung der Netzstromrichter zu den Gruppen erforderlich ist, um diese Frequenzdiversität zu gewährleisten.

Ergänzend kann, wie vorstehend zu FIG 2 beschrieben, von der Steuereinrichtung 30 ein Phasenversatz vorgesehen werden, um eine Überlagerung von Störströmen der mit derselben Schaltfrequenz betriebenen Netzstromrichter 12, 13 zu vermeiden. Dabei werden wiederum die beiden ersten Netzstromrichter 12 zwar mit derselben ersten Schaltfrequenz sf1, jedoch unterschiedlichen Phasen betrieben, und werden die beiden zweiten Netzstromrichter 13 mit derselben zweiten Schaltfrequenz sf2, jedoch ebenso unterschiedlichen Phasen betrieben.

### Bezugszeichenliste

- 10: Schienenfahrzeug
- 12: erster Netzstromrichter
- 13: zweiter Netzstromrichter
- 14: Antriebssystem
- 15: Gleichspannungszwischenkreis
- 16: Antriebsstromrichter
- 19: erste Gruppe Netzstromrichter
- 20: zweite Gruppe Netzstromrichter
- 26: Transformator
- 28: Energieversorgungseinrichtung
- 30: Steuereinrichtung
- sf1: erste Schaltfrequenz
- sf2: zweite Schaltfrequenz

## Patentansprüche

1. Verfahren (100) zum Betreiben eines elektrischen Schienenfahrzeugs (10),
wobei das Schienenfahrzeug (10) umfasst:
- ein elektrisches Antriebssystem (14), M
- zumindest einen ersten (12) und zumindest einen zweiten steuerbaren Netzstromrichter (13), welche mit dem Antriebssystem (14) verbunden sind,
- eine Energieversorgungseinrichtung (28), über welche die Netzstromrichter (12, 13) mit einem fahrzeugexternen Versorgungsnetz verbunden sind, und
- eine Steuereinrichtung (30), welche ausgestaltet ist, zumindest die Netzstromrichter (12, 13) zu steuern,
**dadurch gekennzeichnet, dass**
- der zumindest eine erste Netzstromrichter (12) von der Steuereinrichtung (30) mit einer ersten Schaltfrequenz (sf1) betrieben wird und der zumindest eine zweite Netzstromrichter (13) von der Steuereinrichtung (30) mit einer zweiten Schaltfrequenz (sf2) betrieben wird, wobei sich die erste und die zweite Schaltfrequenz (sf1, sf2) unterscheiden.

2. Verfahren (100) nach Anspruch 1, **dadurch gekennzeichnet, dass**
der zumindest eine erste Netzstromrichter (12) einer ersten Gruppe (19) Netzstromrichter zugeordnet ist, und der zumindest eine zweite Netzstromrichter (13) einer zweiten Gruppe (20) Netzstromrichter zugeordnet ist,
wobei
- alle Netzstromrichter (12) der ersten Gruppe (19) von der Steuereinrichtung (30) mit der ersten Schaltfrequenz (sf1) betrieben werden, und
- alle Netzstromrichter (13) der zweiten Gruppe (20) von der Steuereinrichtung (30) mit der zweiten Schaltfrequenz (sf2) betrieben werden.

3. Verfahren (100) nach Anspruch 1, **dadurch gekennzeichnet, dass**
- einer ersten Gruppe (19) Netzstromrichter zumindest ein erster Netzstromrichter (12) und zumindest ein zweiter Netzstromrichter (13) zugeordnet sind, und
- einer zweiten Gruppe (20) Netzstromrichter zumindest ein erster Netzstromrichter (12) und zumindest ein zweiter Netzstromrichter (13) zugeordnet sind,
wobei alle ersten Netzstromrichter (12) der Gruppen (19, 20) von der Steuereinrichtung (30) mit der ersten Schaltfrequenz (sf1) betrieben werden und alle zweiten Netzstromrichter (13) der Gruppen (19, 20) von der Steuereinrichtung (30) mit der zweiten Schaltfrequenz (sf2) betrieben werden.

4. Verfahren (100) nach Anspruch 1, **dadurch gekennzeichnet, dass**
bei einem Betreiben einer ersten Gruppe (19) Netzstromrichter und einer zweiten Gruppe (20) Netzstromrichter zumindest zwei erste Netzstromrichter (12) der ersten Gruppe (19) zugeordnet sind und zumindest zwei zweite Netzstromrichter (13) der zweiten Gruppe (20) zugeordnet sind,
wobei alle Netzstromrichter (12) der ersten Gruppe (19) von der Steuereinrichtung (30) mit der ersten Schaltfrequenz (sf1) betrieben werden und alle Netzstromrichter (13) der zweiten Gruppe (20) von der Steuereinrichtung (30) mit der zweiten Schaltfrequenz (sf2) betrieben werden, und
- bei einem Betreiben ausschließlich der ersten Gruppe (19) zumindest ein erster Netzstromrichter (12) und zumindest ein zweiter Netzstromrichter (13) der ersten Gruppe (19) zugeordnet werden, wobei alle ersten Netzstromrichter (12) der ersten Gruppe (19) von der Steuereinrichtung (30) mit der ersten Schaltfrequenz (sf1) betrieben werden und alle zweiten Netzstromrichter (13) der ersten Gruppe (19) von der Steuereinrichtung (30) mit der zweiten Schaltfrequenz (sf) betrieben werden, oder
- bei einem Betreiben ausschließlich der zweiten Gruppe (20) zumindest ein erster Netzstromrichter (12) und zumindest ein zweiter Netzstromrichter (13) der zweiten Gruppe (20) zugeordnet werden, wobei alle ersten Netzstromrichter (12) der zweiten Gruppe (20) von der Steuereinrichtung (30) mit der ersten Schaltfrequenz (sf1) betrieben werden und alle zweiten Netzstromrichter (13) der zweiten Gruppe (20) von der Steuereinrichtung (30) mit der zweiten Schaltfrequenz (sf2) betrieben werden.

5. Verfahren (100) nach einem der Ansprüche 2 bis 4, **dadurch gekennzeichnet, dass** sich eine Anzahl der ersten Gruppe (19) zugeordneter erster Netzstromrichter (12) von einer Anzahl der zweiten Gruppe (20) zugeordneter zweiter Netzstromrichter (13) unterscheidet.

6. Verfahren (100) nach einem der vorstehenden Ansprüche, **dadurch gekennzeichnet, dass**
- die ersten Netzstromrichter (12) von der Steuereinrichtung (30) mit einem jeweiligen Phasenversatz der ersten Schaltfrequenz (sf1) betrieben werden, und/oder
- die zweiten Netzstromrichter (13) von der Steuereinrichtung (30) mit einem jeweiligen Phasenversatz der zweiten Schaltfrequenz (sf2) betrieben werden,
wobei sich die Versätze der jeweiligen Schaltfrequenz (sf1, sf2) unterscheiden.

7. Verfahren nach einem der Ansprüche 2 bis 6 **dadurch gekennzeichnet, dass** die Energieversorgungseinrichtung (28) zumindest einen Transformator (26) umfasst, wobei
- der Transformator (26) mit der ersten Gruppe (19) und der zweiten Gruppe (20) verbunden ist, oder
- ein erster Transformator (26) mit der ersten Gruppe (19) verbunden ist und ein zweiter Transformator (26) mit der zweiten Gruppe (20) verbunden ist.

8. Verfahren (100) nach einem der vorstehenden Ansprüche, **dadurch gekennzeichnet, dass** die Netzstromrichter (12, 13) von der Steuereinrichtung (30) jeweils mit einer Schaltfrequenz (sf1, sf2) größer 20 kHz betrieben werden, wobei Leistungshalbleiterschalter der Netzstromrichter (12, 13) insbesondere auf einem Halbleitermaterial mit einer größeren Bandlücke als Silizium basieren.

9. Verfahren (100) nach einem der vorhergehenden Ansprüche, **dadurch gekennzeichnet, dass** die erste (sf1) und die zweite Schaltfrequenz (sf2) von der Steuereinrichtung (30) derart gewählt werden, dass eine aus deren Kombination resultierende Intensität einer für das Versorgungsnetz relevanten Störkenngröße kleiner als ein der Störkenngröße zugeordneter vorgegebener Grenzwert ist.

10. Elektrisches Schienenfahrzeug (10), umfassend:
- ein elektrisches Antriebssystem (14),
- zumindest einen ersten (12) und zumindest einen zweiten steuerbaren Netzstromrichter (13), welche mit dem Antriebssystem (14) verbunden sind,
- eine Energieversorgungseinrichtung (28), über welche die Netzstromrichter (12, 13) mit einem fahrzeugexternen Versorgungsnetz verbunden sind, und
- eine Steuereinrichtung (30), welche ausgestaltet ist, zumindest die Netzstromrichter (12, 13) zu steuern,
**dadurch gekennzeichnet, dass**
- die Steuereinrichtung (30) ausgestaltet ist, den zumindest einen ersten Netzstromrichter (12) und den zumindest einen zweiten Netzstromrichter (13) derart zu steuern, dass der zumindest eine erste Netzstromrichter (12) mit einer ersten Schaltfrequenz (sf1) und der zumindest eine zweite Netzstromrichter (13) mit einer zweiten Schaltfrequenz (sf2) betrieben wird, wobei sich die erste und die zweite Schaltfrequenz (sf1, sf2) unterscheiden.

11. Schienenfahrzeug (10) nach Anspruch 10, **dadurch gekennzeichnet, dass** die Netzstromrichter (12, 13) jeweils als ein Vierquadrantensteller ausgestaltet sind.

12. Schienenfahrzeug (10) nach Anspruch 10 oder 11, **dadurch gekennzeichnet, dass**
- der zumindest eine erste Netzstromrichter (12) einer ersten Gruppe (19) Netzstromrichter zugeordnet ist, und der zumindest eine zweite Netzstromrichter (13) einer zweiten Gruppe (20) Netzstromrichter zugeordnet ist, oder
- einer ersten Gruppe (19) Netzstromrichter zumindest ein erster Netzstromrichter (12) und zumindest ein zweiter Netzstromrichter (13) zugeordnet sind, und einer zweiten Gruppe (20) Netzstromrichter zumindest ein erster Netzstromrichter (12) und zumindest ein zweiter Netzstromrichter (13) zugeordnet sind,
und
die Energieversorgungseinrichtung (28) zumindest einen Transformator (26) umfasst, wobei
- der Transformator (26) mit der ersten Gruppe (19) und der zweiten Gruppe (20) verbunden ist, oder
- ein erster Transformator (26) mit der ersten Gruppe (19) verbunden ist und ein zweiter Transformator (26) mit der zweiten Gruppe (20) verbunden ist.
